# EUROPÄISCHE PATENTSCHRIFT

(11) **EP 2 021 149 B1**
(45) Veröffentlichungstag und Bekanntmachung des Hinweises auf die Patenterteilung: **14.10.2009**
(21) Anmeldenummer: 07725164.3
(22) Anmeldetag: 12.05.2007
(51) Int. Cl.: B23Q 39/02

(54) **WERKZEUGMASCHINE**
MACHINE TOOL
MACHINE-OUTIL

(30) Priorität: 30.05.2006 DE 102006026185
(43) Veröffentlichungstag der Anmeldung: 11.02.2009
(73) Patentinhaber: Index-Werke GmbH & Co. KG Hahn & Tessky, 73730 Esslingen (DE)
(72) Erfinder: GROSSMANN, Walter, 73666 Baltmannsweiler (DE)
(74) Vertreter: Beck, Jürgen
(86) Internationale Anmeldenummer: PCT/EP2007/004244
(87) Internationale Veröffentlichungsnummer: WO 2007/137691

(56) Entgegenhaltungen:
- EP-A1- 0 538 515
- EP-A2- 1 180 412
- WO-A-20/04080649
- DE-A1- 19 959 961
- DE-C1- 4 330 858

## Beschreibung

Die Erfindung betrifft eine Werkzeugmaschine umfassend ein Maschinengestell, eine am Maschinengestell angeordnete erste Werkstückträgereinheit mit einer Werkstückaufnahme, mindestens eine an dem Maschinengestell angeordnete Werkzeugträgereinheit, an welcher mindestens ein Werkzeug zur Bearbeitung eines in der Werkstückaufnahme gehaltenen Werkstücks angeordnet ist, und einen Arbeitsraum, in welchem ein in der Werkstückspindeleinheit gehaltenes Werkstück mit dem Werkzeug bearbeitbar ist, und die Werkzeugträgereinheit eine Werkzeugträgerbasis, einen sich mit einer Längsachse erstreckenden Führungsarm und einen an dem Führungsarm gehaltenen Werkzeugrevolver aufweist, wobei der Werkzeugrevolver ein an dem Führungsarm angeordnetes Revolvergehäuse aufweist, gegenüber welchem ein Revolverkopf um eine quer zur Längsachse verlaufende Revolverachse drehbar ist.

Derartige Werkzeugmaschinen sind aus dem Stand der Technik wie z.B. der DE-A1-199 59 961 bekannt. Bei derartigen Werkzeugmaschinen besteht generell das Problem, eine möglichst kompakt bauende Werkzeugträgereinheit zu schaffen, die andererseits eine möglichst hohe Stabilität aufweist, um eine möglichst präzise Bearbeitung durchführen zu können.

Diese Aufgabe wird bei einer Werkzeugmaschine der eingangs beschriebenen Art erfindungsgemäß dadurch gelöst, dass ein Schnittpunkt zwischen einer Werkzeugebene des Revolverkopfes und der Revolverachse innerhalb eines geometrischen Zylinderraums um die Längsachse liegt, der einen einem mittleren Radius des Führungsarms entsprechenden Radius aufweist:

Der Vorteil der erfindungsgemäßen Lösung ist darin zu sehen, dass durch die Anordnung des Schnittpunktes zwischen der Werkzeugebene und der Revolverachse derart nahe bei der Längsachse die Möglichkeit geschaffen wird, dass bei einer Bearbeitung eines Werkstücks die durch Bewegen des Werkzeugs in der Werkzeugrichtung auftretenden Kräfte mit möglichst geringen Momenten auf den Führungsarm wirken und somit dieser in der Lage ist, diese Kräfte torsionsarm, noch besser im Wesentlichen torsionsfrei, aufzunehmen.

Unter einer Werkzeugebene im Sinne der vorliegenden Erfindung ist die Ebene zu verstehen, in welcher sich die Werkzeuge des Revolverkopfes mit ihren Werkzeugrichtungen, festgelegt durch Vorschub- und/oder Zustellrichtungen bei der Bearbeitung eines Werkstücks erstrecken, die bei einer Bearbeitung des Werkstücks eine in dieser Werkzeugebene wirkende Werkzeugreaktionskraft erfahren.

Besonders günstig ist es dabei, wenn der Zylinderraum einen dem 0,5-fachen mittleren Radius des Führungsarms entsprechenden Radius aufweist.

Noch besser ist es, wenn der Zylinderraum einen dem 0,2-fachen mittleren Radius des Führungsarms entsprechenden Radius aufweist.

Eine besonders günstige Lösung sieht vor, dass der Schnittpunkt näherungsweise auf der Längsachse liegt, so dass dadurch eine im Wesentlichen momentenfrei Kräfteeinleitung der bei der Vorschubbewegung des Werkzeugs auf den Führungsarm wirkenden Kräfte erfolgt und somit sich dieser im Wesentlichen torsionsfrei verhalten kann.

Hinsichtlich der Anordnung der Werkzeuge an dem Revolverkopf wurden bislang keine näheren Angaben gemacht.

So sind vorzugsweise Werkzeugaufnahmen in dem Revolverkopf vorgesehen, die so ausgebildet sind, dass in diese Werkzeughalter mit Werkzeugen in einer Einsetzrichtung einsetzbar sind.

Beispielsweise können dabei die Einsetzrichtungen quer oder sogar senkrecht zur Werkzeugebene verlaufen. Eine konstruktiv besonders günstige Lösung sieht vor, dass die Einsetzrichtungen ungefähr parallel zur Werkzeugebene verlaufen.

Eine besonders günstige Lösung sieht vor, dass die Werkzeugaufnahmen Mittelachsen aufweisen, die ungefähr in der Werkzeugebene liegt, so dass sich die von den Werkzeugen aufgrund der Bewegung derselben in ihrer Werkzeugrichtung wirkenden Kräfte optimal in den Revolverkopf eingeleitet werden können.

Besonders günstig ist es, wenn auch die Mittelachsen in der Werkzeugebene liegen.

Hinsichtlich der Möglichkeit des Einsatzes angetriebener Werkzeuge wurden bislang keine näheren Angaben gemacht. So sieht ein vorteilhaftes Ausführungsbeispiel vor, dass der Revolverkopf mit einer Werkzeugantriebseinheit für angetriebene Werkzeughalter versehen ist.

Diese Werkzeugantriebseinheit kann in unterschiedlichster Art und Weise ausgebildet sein. Beispielsweise kann ein indirekter Antrieb der Werkzeughalter erfolgen.

Eine besonders günstige Lösung sieht vor, dass die Werkzeugantriebseinheit ein im Revolverkopf angeordnetes Antriebselement ist, das mit dem Werkzeughalter in Antriebsverbindung bringbar ist.

Um eine derartige Werkzeugantriebseinheit antreiben zu können, ist ein Antriebsmotor erforderlich.

Üblicherweise ist ein derartiger Antriebsmotor außerhalb des Werkzeugrevolvers angeordnet.

In einem bevorzugten Ausführungsbeispiel ist jedoch zweckmäßigerweise ein Antriebsmotor für die Werkzeugantriebseinheit im Werkzeugrevolver vorgesehen.

Beispielsweise wäre es denkbar, den Antriebsmotor unmittelbar in dem Revolverkopf anzuordnen, da damit der Antriebsmotor im Reparaturfall leicht zugänglich ist.

Besonders zweckmäßig ist es jedoch, insbesondere aus Gründen der Baugröße des Revolverkopfes, wenn der Antriebsmotor in dem Revolvergehäuse angeordnet ist.

Darüber hinaus ist zweckmäßigerweise vorgesehen, dass auch der Revolverkopf durch einen Motor drehbar sein soll.

Dies lässt sich zweckmäßigerweise ebenfalls dadurch realisieren, dass in dem Revolvergehäuse ein Antriebsmotor für einen Drehantrieb des Revolverkopfes angeordnet ist.

Günstigerweise ist dabei vorgesehen, dass derselbe Antriebsmotor für den Drehantrieb des Revolverkopfes und für den Antrieb der Werkzeugantriebseinheit vorgesehen ist.

In diesem Fall ist zweckmäßigerweise eine schaltbare Kupplung zum Umschalten zwischen dem Antrieb der Werkzeugantriebseinheit und dem Antrieb des Revolverkopfes vorgesehen, welche die Möglichkeit eröffnet, die Antriebsleistung des Antriebsmotors entweder für das Drehen des Revolverkopfes oder das Antreiben der Werkzeugantriebseinheit und somit eines angetriebenen Werkzeughalters einzusetzen.

Im Zusammenhang mit der bisherigen Erläuterung der einzelnen Ausführungsbeispiele wurde nicht näher darauf eingegangen, wie die Bewegung des Führungsarms relativ zur Werkzeugträgerbasis erfolgen soll.

So sieht eine vorteilhafte Lösung vor, dass an der Werkzeugträgerbasis eine Antriebseinheit für die Bewegung des Führungsarms relativ zu der Werkzeugträgerbasis vorgesehen ist.

Diese Antriebseinheit ist insbesondere so ausgebildet, dass sie einen Drehantrieb umfasst, dessen Rotor mit dem Führungsarm verbunden ist und dessen Stator drehfest in einem Gehäuse der Antriebseinheit geführt ist. Damit besteht in einfacher Weise die Möglichkeit, den Führungsarm um seine Längsachse zu drehen und somit eine Drehbewegung des an dem Führungsarm sitzenden Werkzeugrevolvers als Ganzes auszuführen.

Ferner ist vorzugsweise vorgesehen, dass der Stator des Drehantriebs durch einen Linearantrieb relativ zum Gehäuse der Antriebseinheit verschiebbar ist.

Damit besteht auch die Möglichkeit, durch Verschieben des Stators und des mit diesem axial unverschieblich gekoppelten Rotors den Führungsarm in Richtung seiner Längsachse und somit in der Vorschubrichtung zu verschieben.

Beispielsweise ist ein derartiger Linearantrieb als Spindelantrieb ausgebildet.

Hinsichtlich der Anordnung des Gehäuses der Antriebseinheit wurden bislang keine näheren Angaben gemacht.

So ist beispielsweise das Gehäuse zweckmäßigerweise mit der Werkzeugträgerbasis verbunden.

Insbesondere sieht eine zweckmäßige Lösung vor, dass das Gehäuse der Antriebseinheit fest mit der Dreh-Längsführung der Werkzeugträgerbasis für den Führungsarm verbunden ist.

Die Werkstückträgereinheit kann beispielsweise ein Drehtisch oder jede Werkstückträgereinheit eines Bearbeitungszentrums oder eines Drehbearbeitungszentrums sein.

Besonders günstig ist eine Lösung, bei welcher die Werkstückträgereinheit eine Werkstückspindeleinheit ist, mit welcher ein Werkstück mit den für die erforderlichen Schnittgeschwindigkeiten bei der Drehbearbeitung notwendigen Drehzahlen rotierend antreibbar und gegebenenfalls auch durch eine C-Achse in beliebigen Drehstellungen positionierbar ist oder mit den Drehzahlen antreibbar ist, die für Vorschubbewegungen erforderlich sind.

Eine für eine Bearbeitung des Werkstücks erforderliche Relativbewegung zwischen der Werkstückträgereinheit und der Werkzeugträgereinheit in X-Richtung und Z-Richtung kann prinzipiell durch beliebige Verteilung der Achsbewegung auf die Werkstückträgereinheit und die Werkzeugträgereinheit realisiert werden.

So können beide Achsbewegungen in X- und Z-Richtung von einer der Einheiten durchgeführt werden oder jede der Einheiten führt nur eine der Achsbewegungen aus.

Hinsichtlich der Bewegbarkeit des Werkzeugrevolvers wurden bislang keine näheren Angaben gemacht. So sieht eine vorteilhafte Ausführungsform vor, dass der Werkzeugrevolver der mindestens einen Werkzeugträgereinheit parallel zu einer Werkzeugführungsebene bewegbar ist, die quer zu der Werkstückspindelachse der dieser zugeordneten Werkstückspindel verläuft.

Ferner ist dabei vorgesehen, dass der Werkzeugrevolver der mindestens einen Werkzeugträgereinheit in der Werkzeugführungsebene in einer ersten, parallel zur Spindelführungsebene verlaufenden Richtung bewegbar ist.

Eine weitere zweckmäßige Ausführungsform sieht vor, dass der Werkzeugrevolver der mindestens einen Werkzeugträgereinheit in einer zweiten, senkrecht zur Spindelführungsebene verlaufenden Richtung bewegbar ist.

Schließlich ist bei einer vorteilhaften Lösung vorgesehen, dass der Werkzeugrevolver der mindestens einen Werkzeugträgereinheit um eine parallel zur Werkzeugführungsebene verlaufende Achse drehbar ist.

Eine hinsichtlich der Bewegungskinematik besonders günstige Lösung sieht vor, dass der Werkzeugrevolver relativ zur Werkzeugträgerbasis in einer Vorschubrichtung linear bewegbar ist und um eine zur Vorschubrichtung parallele Drehachse drehbar ist.

Hinsichtlich der Anordnung der Werkzeugträgerbasis relativ zum Maschinenbettkörper wurden bislang keine näheren Angaben gemacht. So sieht eine günstige Lösung vor, dass die Werkzeugträgerbasis auf einem Werkzeugschlitten angeordnet ist.

Dabei ist der Werkzeugschlitten vorzugsweise in einer Schlittenvorschubrichtung bewegbar, die ungefähr parallel zu einer Längsrichtung der jeweiligen Säule verläuft.

Ferner ist der Werkzeugschlitten vorzugsweise in einer Schlittenvorschubrichtung bewegbar, die ungefähr parallel zu einer Querrichtung zur jeweiligen Werkstückspindelachse verläuft.

Insbesondere ist der Werkzeugschlitten in einer Schlittenvorschubrichtung bewegbar, die ungefähr parallel zur jeweiligen Querseite verläuft, an der der Werkzeugschlitten angeordnet ist.

Außerdem ist vorgesehen, dass der Werkzeugschlitten in einer X-Richtung der Werkzeugmaschine bewegbar ist.

Hinsichtlich der Realisierung einer weiteren Vorschubrichtung des Werkzeugrevolvers ist vorgesehen, dass der Werkzeugrevolver gegenüber der Werkzeugträgerbasis in einer. Vorschubrichtung bewegbar ist.

Vorzugsweise verläuft dabei die Vorschubrichtung ungefähr parallel zu einer Querrichtung zur jeweiligen Werkstückspindelachse.

Dabei ist die Vorschubrichtung vorzugsweise eine Y-Richtung der Werkzeugmaschine.

Insbesondere verläuft in diesem Fall die Vorschubrichtung parallel zu einer Querrichtung zur Schlittenvorschubrichtung, längs welcher die Werkzeugträgerbasis bewegbar ist.

Darüber hinaus ist der Werkzeugrevolver gegenüber der Werkzeugträgerbasis vorzugsweise um eine Drehachse drehbar.

Insbesondere ist die Drehachse so ausgerichtet, dass diese ungefähr parallel zu der Vorschubrichtung verläuft.

Vorzugsweise ist die Drehachse so ausgerichtet, dass sie in einer Richtung verläuft; die parallel zu einer Querrichtung zur jeweiligen Werkstückspindelachse ausgerichtet ist.

Ferner verläuft insbesondere die Drehachse parallel zu einer Querrichtung zur Schlittenvorschubrichtung.

Eine bevorzugte Lösung sieht vor, dass die Drehachse eine B-Achse der Werkzeugmaschine ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Figur 1: eine Draufsicht auf ein Ausführungsbeispiel einer erfindungs- gemäßen Werkzeugmaschine von vorne;
- Figur 2: einen Schnitt längs Linie 2-2 in Figur 1;
- Figur 3: eine vergrößerte geschnittene Darstellung einer Antriebseinheit für den Führungsarm;
- Figur 4: eine vergrößerte Schnittdarstellung eines Werkzeugrevolvers der erfindungsgemäßen Werkzeugmaschine längs Linie 4-4 in Figur 5;
- Figur 5: eine vergrößerte Schnittdarstellung des Werkzeugrevolvers der erfindungsgemäßen Werkzeugmaschine längs Linie 5-5 in Figur 4.

Ein erstes Ausführungsbeispiel einer erfindungsgemäßen Werkzeugmaschine, insbesondere eines Drehbearbeitungszentrums, umfasst ein als Ganzes mit 10 bezeichnetes Maschinengestell, mit einer Gestellbasis 12, welche mit ihrer Unterseite 14 auf einer Standfläche 16 ruht und einem sich über der Gestellbasis 12 erhebenden Maschinenbettkörper 18, welcher eine erste Säule 20 und eine zweite Säule 22 umfasst, die im Abstand voneinander angeordnet sind und sich mit ungefähr parallel zueinander verlaufenden Längsachsen 24, 26 von der Gestellbasis 12 weg erstrecken, wobei die Längsachsen 24, 26 vorzugsweise quer zur Standfläche 16, vorzugsweise senkrecht zu dieser, verlaufen.

Die beiden Säulen 20, 22 könnten prinzipiell sich unabhängig voneinander über der Gestellbasis 12 erheben. Weit stabiler ist jedoch ein Aufbau des Maschinenbettkörpers 18, bei welchem die beiden Säulen 20, 22 durch eine erste Querverstrebung 28 und eine zweite Querverstrebung 30 miteinander verbunden sind.

Ferner sind die beiden Säulen 20, 22 in einem derartigen Abstand voneinander angeordnet, dass zwischen diesen ein ausreichend großer Durchlass 32 besteht, der im Fall der Querverstrebungen 28, 30 allseitig von dem Maschinenbettkörper umschlossen ist, so dass der Maschinenbettkörper 18 insgesamt jochähnlich ausgebildet ist und somit jochähnlich geschlossen den Durchlass 32 umgibt.

Ferner weist die erste Säule 20 eine erste Frontseite 34 auf und die zweite Säule 22 weist eine zweite Frontseite 36 auf, die einem Arbeitsraum 40 zugewandt sind, der auf einer Seite des Maschinenbettkörpers 18 angeordnet ist und vor den beiden Frontseiten 34, 36 sowie vor dem Durchlass 32 liegt und sich quer zu den Längsachsen 24, 26 und in Richtung parallel zu den Längsachsen 26 vor dem Maschinenkörper 18 ausdehnt.

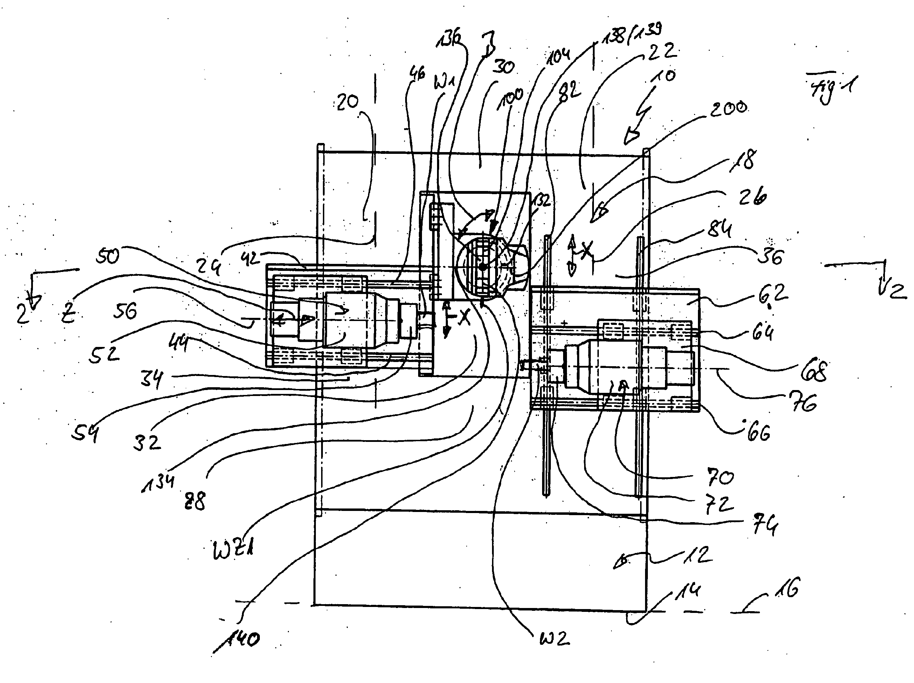

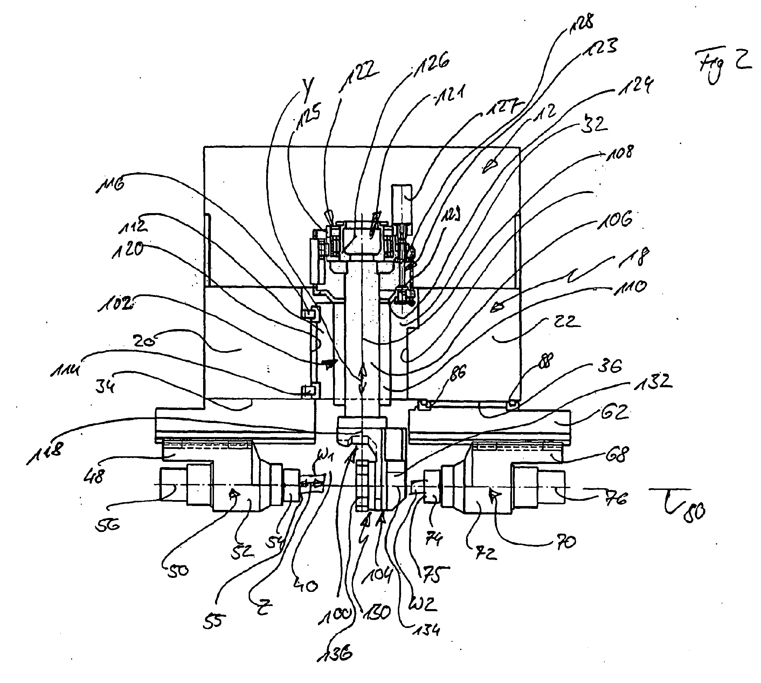

Wie ferner in Figur 1 und 2 dargestellt, ist an der ersten Frontseite 34 ein Grundkörper 42 mit parallel zueinander verlaufenden Schlittenführungen 44, 46 angeordnet, die sich quer zu der Längsachse 24 der ersten Säule 20 erstrecken und auf denen ein Spindelschlitten 48 geführt ist, auf dem eine als Ganzes mit 50 bezeichnete erste Werkstückspindeleinheit angeordnet ist, die ein erstes Werkstückspindelgehäuse 52 umfasst, in welchem eine erste Werkstückspindel 54 um eine erste Werkstückspindelachse 56 drehbar gelagert ist. Vorzugsweise verläuft die Werkstückspindelachse 56 parallel zu den Schlittenführungen 44, 46 und außerdem im Wesentlichen in horizontaler Richtung.

Durch die auf dem Grundkörper 42 sitzenden Schlittenführungen 44, 46 ist somit die erste Werkstückspindeleinheit 50 in Richtung parallel zur ersten Werkstückspindelachse 56 und somit in einer sogenannten Z-Richtung relativ zur ersten Säule 20 bewegbar.

Auf der zweiten Frontseite 36 der zweiten Säule 22 ist ebenfalls ein Grundkörper 62 vorgesehen, auf welchem ebenfalls quer zu der Längsachse 26 verlaufende Schlittenführungen 64, 66 angeordnet sind, auf denen ein Spindelschlitten 68 verfahrbar angeordnet ist.

Auch der Spindelschlitten 68 trägt eine zweite Werkstückspindeleinheit 70 mit einem zweiten Werkstückspindelgehäuse 72, in welchem eine zweite Werkstückspindel 74 um eine zweite Werkstückspindelachse 76 drehbar gelagert ist.

Insbesondere liegen die erste Werkstückspindelachse 56 und die zweite Werkstückspindelachse 76 in einer als Ganzes mit 80 bezeichneten Spindelebene, die vorzugsweise parallel zu den Frontseiten 34 und 36 und im Abstand von diesen verläuft.

Prinzipiell wäre es denkbar, den Grundkörper 62 stationär an der Frontseite 36 anzuordnen und zwar so, dass die erste und die zweite Werkstückspindelachsen 56 und 76 miteinander fluchten.

Es sind bei dem ersten Ausführungsbeispiel, so wie in Figur 1 und 2 dargestellt, auf der Frontseite 36 Schlittenführungen 82, 84 vorgesehen, auf denen der Grundkörper 62 mit Führungskörpern 86, 88 geführt ist, wobei die Schlittenführungen 82, 84 vorzugsweise ungefähr parallel zur Längsachse 26 der Säule 22 verlaufen.

Somit ist die zweite Werkstückspindeleinheit 70 einerseits durch den Spindelschlitten 68 ebenfalls in Z-Richtung bewegbar und andererseits durch Verfahren des Grundkörpers 62 auf den Schlittenführungen 82 und 84 relativ zur zweiten Säule 22 noch in einer sogenannten X-Richtung, die senkrecht zu den Spindelachsen 56 und 76 verläuft.

Die erste Werkstückspindel 54 und die zweite Werkstückspindel 74 sind so ausgebildet, dass auf der jeweils der anderen Werkstückspindel 74 bzw. 54 zugewandten Seite eine Werkstückspanneinrichtung 55, 75 vorgesehen ist, durch welche ein erstes Werkstück W1 in der ersten Werkstückspindel 54 und ein zweites Werkstück W2 in der zweiten Werkstückspindel 74 fixierbar und zur Bearbeitung desselben um die jeweilige Werkstückspindelachse 56 bzw. 76 drehbar ist.

Wie in Figur 1 und 2 dargestellt, ist das erfindungsgemäße Drehbearbeitungszentrum mit einer als Ganzes mit 100 bezeichneten Werkzeugträgereinheit versehen, die eine sich teilweise in dem Durchlass 32 erstreckende Werkzeugträgerbasis 102 und einen in dem Arbeitsraum 40 angeordneten Werkzeugträger 104 aufweist.

Der Werkzeugträger 104 sitzt dabei auf einem Führungsarm 106, welcher relativ zur Werkzeugträgerbasis 102 in Richtung einer Längsachse 108 des Führungsarms 106 verschiebbar in der Werkzeugträgerbasis 102 gelagert ist und außerdem in der Werkzeugträgerbasis 102 um die Längsachse 108 des Führungsarms 106 drehbar ist.

Hierzu ist vorzugsweise der Führungsarm 106 in einer Längs- und Drehführung 110 der Werkzeugträgerbasis 102 geführt.

Die Längs- und Drehführung 110 der Werkzeugträger 102 sitzt dabei auf einem Werkzeugträgerschlitten 112, welcher seinerseits an Schlittenführungen 114, 116 geführt ist.

Die Schlittenführungen 114, 116 sitzen auf einer ersten Querseite 120 der ersten Säule 20, die dem Durchlass 32 und der gegenüberliegenden zweiten Säule 22 zugewandt ist.

Dabei erstrecken sich die Schlittenführungen 114, 116 vorzugsweise parallel zur Längsachse 24 der ersten Säule 20, so dass der Werkzeugträgerschlitten 112 in dem Durchlass 32 längs der ersten Säule 20 bewegbar ist, vorzugsweise in der X-Richtung.

Somit besteht die Möglichkeit, ein in dem Werkzeugträger 104 gehaltenes Werkzeug WZ1 in Richtung des in der ersten Werkstückspindel 54 gehaltenen Werkstücks W1 in X-Richtung zuzustellen.

Ferner ist die Längs- und Drehführung 110 für den Führungsarm 106 so auf dem Werkzeugträgerschlitten 112 angeordnet, dass, wie insbesondere in Figur 2 dargestellt, die Längsachse 108 des Führungsarms 106 quer zu den Schlittenführungen 114, 116 und somit auch quer zur Spindelebene 80 verläuft. Vorzugsweise verläuft die Längsachse 108 senkrecht zur Spindelführungsebene 80.

Damit ist der Werkzeugträger 104 nicht nur durch Bewegen des Werkzeugträgerschlittens 112 in der X-Richtung relativ zum Werkstück W1 bewegbar, sondern auch quer zu der X-Richtung in Richtung der Längsachse 108 und somit in einer Y-Richtung bewegbar sowie um die Längsachse 108, das heißt um eine sogenannte B-Achse, drehbar.

Insgesamt ist somit der Werkzeugträger 104 in einer Werkzeugführungsebene 118, die parallel zur X-Richtung und parallel zur Y-Richtung verläuft, bewegbar, wobei die Werkzeugführungsebene 118 quer, vorzugsweise senkrecht, zur Spindelführungsebene 80 verläuft.

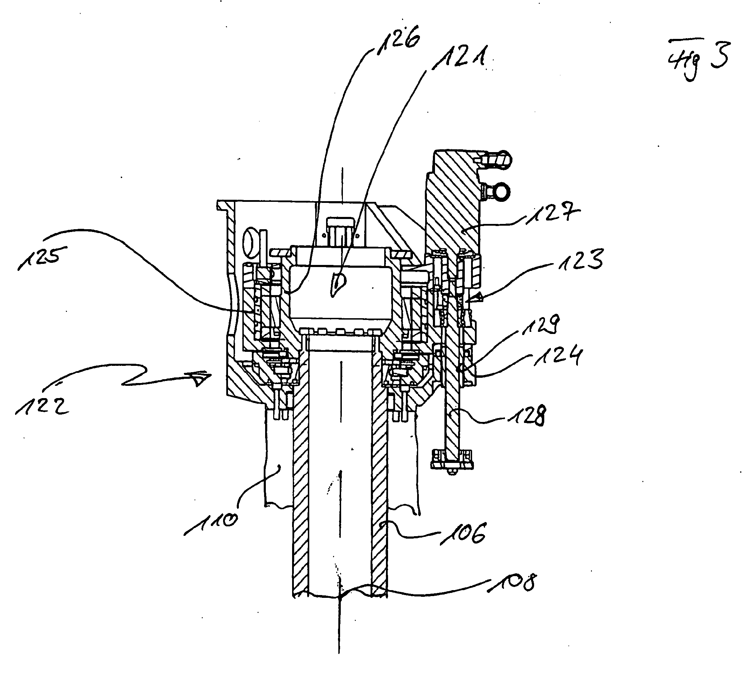

Für die Bewegungen in der Y-Richtung und die Drehung um die B-Achse ist, wie in Figur 2 und Figur 3 dargestellt, ein als Ganzes mit 122 bezeichnete Antriebseinheit vorgesehen, deren Gehäuse 124 an der Längs- und Drehführung 110 fixiert ist, und die auf einer dem Werkzeugträger 104. gegenüberliegenden Seite des Maschinenbettkörpers 18 angeordnet ist.

Dabei sind in dem Gehäuse 124 ein Drehantrieb 121 und ein Linearantrieb 123 vorgesehen.

Der Drehantrieb 121 umfasst einen Stator 125 des Drehantriebs 121, insbesondere eines Torque-Motors, der in dem Gehäuse in Richtung parallel zur Längsachse 108 verschieblich, jedoch drehfest geführt, während ein Rotor 126 des Drehantriebs, unmittelbar an einem Ende des Führungsarms 106 angeordnet ist, so dass mittels des Drehantriebs 121 der Führungsarm 106 relativ zu dem Gehäuse 124 und somit zu der Dreh-Längsführung 110 um die Längsachse 108 und somit um die B-Achse drehbar ist.

Ferner ist der Stator 125 axial unverschiebbar, jedoch drehbar mit dem Rotor 126 verbunden, so dass ein axiales Verschieben des Stators 125 in Richtung der Längsachse 108 eine Vorschubbewegung des Führungsarms 106 und folglich des Werkzeugträgers 104 in Richtung der Längsachse 108 und somit in Y-Richtung der Werkzeugmaschine bewirkt.

Zur linearen Verschiebung des Stators 125 relativ zum Gehäuse 124 ist der Linearantrieb 123 mit einem an dem Stator 126 sitzenden Antriebsmotor 127 und einer Spindel 128 versehen, deren Spindelmutter 129 fest in dem Gehäuse 124 sitzt, so dass ein Drehen der Spindel 128 den Stator 125 relativ zum Gehäuse 124 in Richtung der Längsachse 108 verschiebt.

Bei dem in Figur 1 und 2 dargestellten ersten Ausführungsbeispiel ist der Werkzeugträger 104 als Werkzeugrevolver 130 ausgebildet und umfasst ein Revolvergehäuse 132, an welchem um eine Revolverachse 134 drehbar ein Revolverkopf 136 angeordnet ist.

Die Revolverachse 134 verläuft dabei quer, vorzugsweise senkrecht zur Längsachse 108 und schneidet die Längsachse 108 in einem Schnittpunkt 138, der vorzugsweise nahe eines Schnittpunkts 139 zwischen einer Werkzeugebene 140 des Revolverkopfes 136 und der Revolverachse 134 liegt.

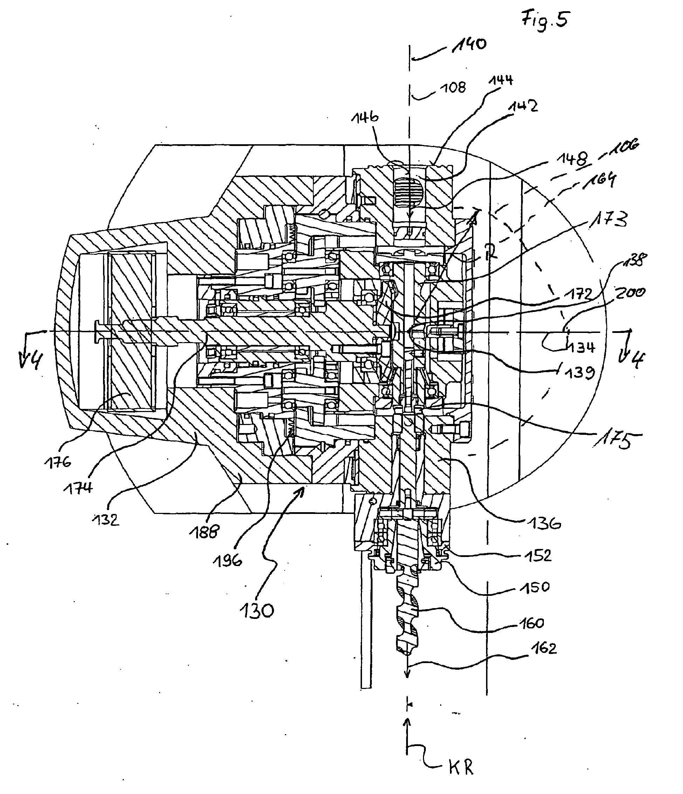

Wie in Figur 2, 4 und 5 dargestellt, umfasst der Revolverkopf 136 Werkzeugaufnahmen 142, die sich von einer Umfangsseite 144 ausgehend in den Revolverkopf 136 hineinerstrecken, wobei in die Werkzeugaufnahmen 142 Werkzeughalter 150 mit einem Schaft 152 einsetzbar und in den Werkzeugaufnahmen 142 fixierbar sind.

In diesen Werkzeughaltern 150 sind Werkzeuge 160 montierbar, die so ausgebildet sind, dass diesen mindestens eine Werkzeugrichtung 162 zugeordnet ist, die bei in den Revolverkopf 136 eingesetzten Werkzeughaltern 150 radial zur Revolverachse 134 ausgerichtet ist. In dieser Werkzeugrichtung, jedoch zum Revolverkopf 136 hin, wirkt dann eine Werkzeugreaktionskraft.

Die Werkzeugreaktionskraft'KR aller Werkzeuge 160 des Revolverkopfes 136, die radial zur Revolverachse 134 verläuft, liegt ferner in der Werkzeugebene 140. Aus diesem Grund sind zur Positionierung der Werkzeuge 160 mit ihrer Werkzeugrichtung 162, festgelegt durch eine Vorschub- und/oder Zustellrichtung der Werkzeuge 160 bei der Bearbeitung des Werkstücks, in der Werkzeugebene 140 auch die Werkzeugaufnahmen 142 so angeordnet, dass eine Mittelachse 146 derselben ebenfalls in der Werkzeugebene 140 liegt.

Außerdem ist eine Einsetzrichtung 148, längs welcher der Schaft 152 zu bewegen ist, um diesen in die Werkzeugaufnahme 142 einzusetzen, parallel zur Werkzeugebene 140 ausgerichtet und verläuft vorzugsweise in der Werkzeugebene 140.

Wie bereits dargelegt, schneidet die Werkzeugebene 140 die Revolverachse 134 in einem Schnittpunkt 139 zwischen dieser und der Längsachse 108, wobei zur Erfüllung dieser Bedingung die Revolverachse 134 und die Werkzeugebene 140 einen Winkel mit der Längsachse 108 einschließen könnten. Eine bevorzugte Lösung sieht jedoch vor, dass die Revolverachse 134 im Wesentlichen senkrecht zur Werkzeugebene 140 verläuft.

Eine bevorzugte Lösung sieht vor, dass auch die Revolverachse 134 senkrecht zur Längsachse 108 verläuft. In diesem Fall verläuft auch die Längsachse 108 im Wesentlichen parallel zu der Werkzeugebene 140. Eine hinsichtlich der auftretenden Kräfte besonders günstige Konzeption sieht vor, dass die Längsachse 108 ebenfalls in der Werkzeugebene 140 verläuft, so dass die Schnittpunkte 139 und 138 zusammenfallen.

Damit werden alle aufgrund der Bewegung des jeweiligen Werkzeugs 160 in der Werkzeugrichtung 162 wirkenden Kräfte KR radial zur Revolverachse 134 in den Revolverkopf 136 eingeleitet und wirken in Richtung auf den Schnittpunkt 138 zwischen der Revolverachse 134 und der Längsachse 108 und somit im Wesentlichen ohne ein Drehmoment auf die Längsachse 108, so dass der Führungsarm 106 im Wesentlichen durch die Kräfte KR keine Torsionsbelastung erfährt.

In Abweichung von diesem Ausführungsbeispiel besteht aber auch die Möglichkeit, den Schnittpunkt 139 zwischen der Revolverachse 134 und der Werkzeugebene 140 innerhalb eines geometrischen Zylinderraums 164 vorzusehen, welcher sich um die Längsachse 108 als Zylinderachse herum mit einem Radius R erstreckt, der maximal einem mittleren äußeren Radius des Führungsarms 106 entspricht, vorzugsweise kleiner ist als dieser, und beispielsweise einen Radius R aufweist, der ungefähr einem halben mittleren Radius des Führungsarms 106, noch besser dem ungefähr 0,2-fachen des Führungsarms 106 entspricht.

Solange der Schnittpunkt 139 innerhalb eines derart dimensionierten Zylinderraums 164 um die Längsachse 108 als Zylinderachse liegt, sind die beim Einsatz der Werkzeuge 160 auf den Führungsarm 106 wirkenden Drehmomente so gering, dass diese problemlos von dem Drehantrieb 121 oder einer dieser zugeordneten Brems- oder Blockiervorrichtung aufgenommen werden können.

Durch diese konstruktive Maßnahme wird die Präzision einer Werkzeugmaschine dieser Art erheblich verbessert, da die Werkzeugträgereinheit 100 aufgrund ihrer Konstruktion in der Lage ist, diese Kräfte optimal und mit der geringst möglichen Deformationen aufzunehmen.

Um die Werkzeuge 160 in den Werkzeughaltern 150 auch noch antreiben zu können, ist in dem Revolverkopf 136 noch als Antriebselement ein Antriebsrad 172 vorgesehen, welches auf einer Antriebswelle 174 sitzt, die ihrerseits drehbar sowohl im Revolverkopf 136 als auch im Revolvergehäuse 132 koaxial zur Revolverachse 134 gelagert ist.

Die Antriebswelle 174 trägt auf ihrer dem Antriebsrad 172 abgewandten Seite ein Getrieberad 176 eines als Ganzes mit 178 bezeichneten Übertragungsgetriebes, welches ein weiteres Getrieberad 180 aufweist, das auf einer Motorwelle 182 eines Antriebsmotors 184 sitzt, der in dem Revolvergehäuse 132, und zwar in einem Basisbereich 186 des Revolvergehäuses 132, angeordnet ist, welcher zwischen einem den Revolverkopf 136 lagernden Kopfbereich 188 des Revolvergehäuses 132 und einem auf dem Führungsarm 106 montierten Fußbereich 190 des Revolvergehäuses 132 liegt.

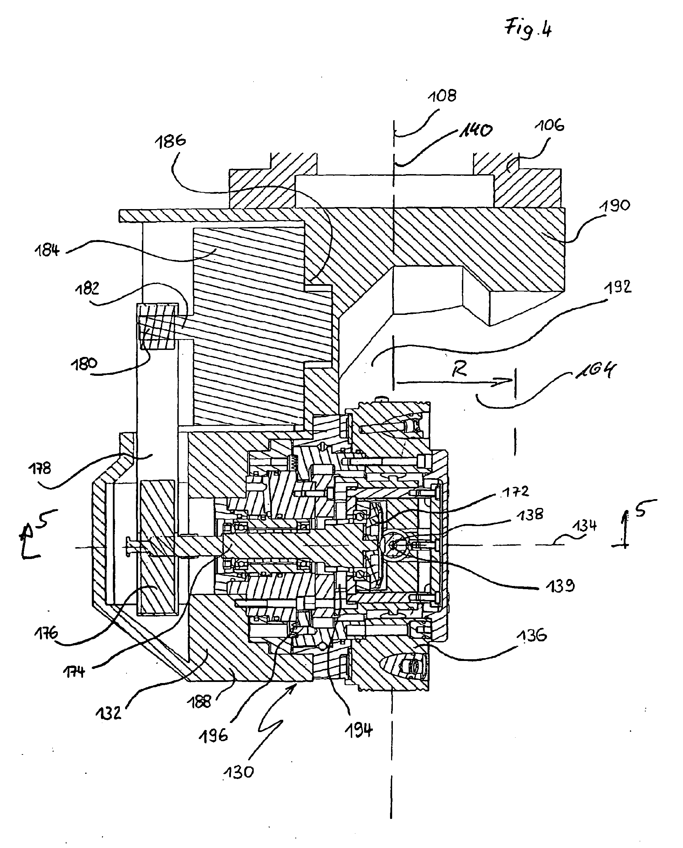

Um ausreichend Raum zur Drehung des Revolverkopfes 136 bestückt mit Werkzeughaltern 150 und Werkzeugen 160 zu haben, liegt zwischen dem Fußbereich 190 und dem Revolverkopf 134 ein Freiraum 192, welcher radial zur Revolverachse 134 ausreichend groß dimensioniert ist, um die Werkzeuge 160 mit den vorgesehenen Längen aufnehmen zu können (Figur 4).

Seitlich des Freiraums 192 liegt dann zwischen dem Fußbereich 190 und dem Kopfbereich 188 des Revolvergehäuses 132 der Basisbereich 186 des Revolvergehäuses 132, in welchem der Antriebsmotor 184 untergebracht ist.

Ein Antrieb der Werkzeughalter 150 erfolgt in konventioneller Weise über eine Werkzeugantriebswelle 173, die von dem Antriebsrad 172 drehangetrieben wird, und an die der in Arbeitsposition befindliche Werkzeughalter 150 mittels einer Kupplung 175 angekuppelt werden kann.

Um außerdem auch noch eine Revolverschaltung des Revolverkopfes 136 in seine verschiedenen Drehstellungen durchführen zu können, welche es erlauben, die in den Werkzeugaufnahmen 142 eingesetzten Werkzeughalter 150 mit den entsprechenden Werkzeugen 160 in eine Arbeitsposition zu bringen, ist die Antriebswelle 174 noch durch eine Kupplung 194 an den Revolverkopf 136 ankuppelbar, so dass in diesem Fall bei einer Drehung der Antriebswelle 174 ein Drehen des Revolverkopfes 136 um die Revolverachse 134 erfolgt, während die Werkzeugantriebswelle 173 stillgesetzt ist.

Ferner ist noch eine dreiteilige Hirthverzahnung 196 vorgesehen, mit welcher der Revolverkopf 136 in seinen einzelnen Drehstellungen relativ zum Revolvergehäuse 132 festlegbar ist.

Bei dem erfindungsgemäßen Werkzeugrevolver 130 steht das Werkzeug 160. dann in der Arbeitsstellung, wenn dessen Werkzeugrichtung 162 senkrecht zu einer Ebene 200 steht, welche durch die Längsachse 108 und die Revolverachse 134 aufgespannt wird.

Der Werkzeugrevolver 130 lässt sich vorzugsweise so einsetzen, dass stets das Revolvergehäuse 132 auf einer dem jeweiligen Werkstück W abgewandten Seite steht. Durch Drehen des gesamten Werkzeugrevolvers 130 um die Längsachse 108 als Drehachse besteht somit die Möglichkeit, einmal die Werkzeuge des Revolverkopfes 136 zum Bearbeiten des Werkstücks W1, aufgenommen in der ersten Werkstückspindel 54 einzusetzen, wobei die Werkzeugträgereinheit 100 mit dem Werkzeugträgerschlitten 112 in X-Richtung bewegbar ist, oder zum Bearbeiten des Werkstücks W2, aufgenommen in der zweiten Werkstückspindel 74, einzusetzen, wobei die Werkzeugträgereinheit 100 stationär stehen bleiben kann und die Werkzeugspindeleinheit 70 in X-Richtung verfahren werden kann.

Es besteht aber auch die Möglichkeit den Werkzeugrevolver 130 so um die Längsachse 108 zu drehen, dass die Werkzeugebene 140 parallel zu den Werkstückspindelachsen 56 und 76 ausgerichtet ist, um somit mit einem Werkzeug 160 eine Bearbeitung am Werkstück W1 unter Verfahren der Werkzeugspindeleinheit 50 in Z-Richtung und der Werkzeugträgereinheit 100 in X-Richtung erfolgt.

Ein gegenüberliegendes Werkzeug 160 kann dann zur Bearbeitung des Werkstücks W2 eingesetzt werden, wobei die Bewegung in X-Richtung der Relativbewegung der in X-Richtung nachgeführten zweiten Werkstückspindeleinheit 70 in X-Richtung entspricht und die Bewegung in Z-Richtung der Verschiebung der zweiten Werkstückspindeleinheit in Z-Richtung.

## Patentansprüche

1. Werkzeugmaschine umfassend
ein Maschinengestell (10),
eine am Maschinengestell (10) angeordnete erste Werkstückträgereinheit einheit (50, 70) mit einer Werkstückaufnahme (55, 75);
mindestens eine an dem Maschinengestell (10) angeordnete Werkzeugträgereinheit (100) an welcher mindestens ein Werkzeug (160) zur Bearbeitung eines in der Werkstückaufnahme (55) gehaltenen Werkstücks (W) angeordnet ist,
und einen Arbeitsraum (40) in welchem ein in der Werkstückaufnahme (55, 75) gehaltenes Werkstück (W) mit dem Werkzeug (160) bearbeitbar ist, und
die Werkzeugträgereinheit (100) eine Werkzeugträgerbasis (102), einen sich mit einer Längsachse (108) erstreckenden Führungsarm (106) und einen an dem Führungsarm (106) gehaltenen Werkzeugrevolver (130) aufweist, wobei der Werkzeugrevolver (130) ein an dem Führungsarm (106) angeordnetes Revolvergehäuse (132) aufweist, gegenüber welchem ein Revolverkopf (136) um eine eine quer zur Längsachse (108) verlaufende Revolverachse (134) drehbar ist, **dadurch gekennzeichnet, dass**
ein Schnittpunkt (139) zwischen einer Werkzeugebene (140) des Revolverkopfes (136) und der Revolverachse (134) innerhalb eines geometrischen Zylinderraumes (164) um die Längsachse (108) liegt, der einen einem mittleren Radius des Führungsarms (106) entsprechenden Radius (R) aufweist.

2. Werkzeugmaschine nach Anspruch 1, **dadurch gekennzeichnet, dass** der Zylinderraum (164) einen dem 0,5-fachen mittleren Radius des Führungsarms (106) entsprechenden Radius (R) aufweist.

3. Werkzeugmaschine nach Anspruch 2, **dadurch gekennzeichnet, dass** der Zylinderraum (164) einen dem 0,2-fachen mittleren Radius des Führungsarms (106) entsprechenden Radius (R) aufweist.

4. Werkzeugmaschine nach einem der voranstehenden Ansprüche, **dadurch gekennzeichnet, dass** der Schnittpunkt (139) näherungsweise auf der Längsachse (108) liegt.

5. Werkzeugmaschine nach einem der voranstehenden Ansprüche, **dadurch gekennzeichnet, dass** die Werkzeugaufnahmen (142) des Revolverkopfes (136) so ausgebildet sind, dass in diese Werkzeughalter (150) mit Werkzeugen (160) in einer Einsetzrichtung (148) einsetzbar sind.

6. Werkzeugmaschine nach Anspruch 5, **dadurch gekennzeichnet, dass** die Einsetzrichtungen (148) ungefähr parallel zur Werkzeugebene (140) verlaufen.

7. Werkzeugmaschine nach Anspruch 5 oder 6, **dadurch gekennzeichnet, dass** die Werkzeugaufnahmen (142) Mittelachsen (146) aufweisen, die ungefähr parallel in der Werkzeugebene (140) liegt.

8. Werkzeugmaschine nach einem der voranstehenden Ansprüche, **dadurch gekennzeichnet, dass** der Revolverkopf (136) mit einer Werkzeugantriebseinheit (172, 173) für angetriebene Werkzeughalter (150) versehen ist.

9. Werkzeugmaschine nach Anspruch 8, **dadurch gekennzeichnet, dass** die Werkzeugantriebseinheit ein im Revolverkopf (136) angeordnetes Antriebselement (173) ist.

10. Werkzeugmaschine nach Anspruch 8 oder 9, **dadurch gekennzeichnet, dass** ein Antriebsmotor (184) für die Werkzeugantriebseinheit (172, 173) im Werkzeugrevolver (130) vorgesehen ist.

11. Werkzeugmaschine nach Anspruch 10, **dadurch gekennzeichnet, dass** der Antriebsmotor (184) in dem Revolvergehäuse (132) angeordnet ist.

12. Werkzeugmaschine nach einem der voranstehenden Ansprüche, **dadurch gekennzeichnet, dass** in dem Revolvergehäuse (132) ein Antriebsmotor (184) für einen Drehantrieb des Revolverkopfes (136) angeordnet ist.

13. Werkzeugmaschine nach einem der Ansprüche 10 bis 12, **dadurch gekennzeichnet, dass** derselbe Antriebsmotor (184) für den Drehantrieb des Revolverkopfs (136) und für den Antrieb der Werkzeugantriebseinheit (172, 173) vorgesehen ist.

14. Werkzeugmaschine nach Anspruch 13, **dadurch gekennzeichnet, dass** eine schaltbare Kupplung (194) zum Umschalten zwischen dem Antrieb der Werkzeugantriebseinheit (172, 173) und dem Antrieb des Revolverkopfes (136) vorgesehen ist.

15. Werkzeugmaschine nach einem der voranstehenden Ansprüche, **dadurch gekennzeichnet, dass** an der Werkzeugträgerbasis (102) eine Antriebseinheit (122) für die Bewegung des Führungsarms (106) relativ zur Werkzeugträgerbasis (102) vorgesehen ist.

16. Werkzeugmaschine nach Anspruch 15, **dadurch gekennzeichnet, dass** die Antriebseinheit (122) ein Drehantrieb (121) umfasst, dessen Rotor (126) mit dem Führungsarm (106) verbunden ist und dessen Stator (125) drehfest in einem Gehäuse (124) der Antriebseinheit (122) geführt ist.

17. Werkzeugmaschine nach Anspruch 15 oder 16, **dadurch gekennzeichnet, dass** der Stator (125) des Drehantriebs (121) durch einen Linearantrieb (123) relativ zum Gehäuse (124) der Antriebseinheit (122) verschiebbar ist.

18. Werkzeugmaschine nach einem der Ansprüche 15 bis 17, **dadurch gekennzeichnet, dass** das Gehäuse (124) der Antriebseinheit (122) fest mit der Werkzeugträgerbasis (102) verbunden ist.

19. Werkzeugmaschine nach Anspruch 18, **dadurch gekennzeichnet, dass** die Werkzeugträgerbasis (102) eine Längs-Drehführung (110) für den Führungsarm (106) aufweist.

20. Werkzeugmaschine nach Anspruch 19, **dadurch gekennzeichnet, dass** das Gehäuse (124) der Antriebseinheit (122) mit der Längs-Drehführung (110) verbunden ist.

21. Werkzeugmaschine nach einem der voranstehenden Ansprüche, **dadurch gekennzeichnet, dass** die Werkstückträgereinheit (50, 70) eine Werkstückspindeleinheit (50, 70) mit einer um eine Werkstückspindelachse (56, 76) drehbaren Werkstückspindel (54, 74) ist.

22. Werkzeugmaschine nach Anspruch 21, **dadurch gekennzeichnet, dass** der Werkzeugrevolver. (130) der mindestens einen Werkzeugträgereinheit (100, 150) parallel zu einer Werkzeugführungsebene (118) bewegbar ist, die quer zu der Werkstückspindelachse (56, 76) der dieser zugeordneten Werkstückspindeleinheit (50, 70) verläuft.

23. Werkzeugmaschine nach Anspruch 22, **dadurch gekennzeichnet, dass** der Werkzeugrevolver (130) der mindestens einen Werkzeugträgereinheit (100, 150) in der Werkzeugführungsebene (118) in einer ersten, parallel zu einer Spindelführungsebene (80) verlaufenden Richtung (X) bewegbar ist.

24. Werkzeugmaschine nach Anspruch 22 oder 23, **dadurch gekennzeichnet, dass** der Werkzeugrevolver (130) der mindestens einen Werkzeugträgereinheit (100, 150) in der Werkzeugführungsebene (118) in einer zweiten, senkrecht zur Spindelführungsebene (80) verlaufenden Richtung (Y) bewegbar ist.

25. Werkzeugmaschine nach einem der Ansprüche 22 bis 24, **dadurch gekennzeichnet, dass** der Werkzeugrevolver (130) der mindestens einen Werkzeugträgereinheit (100, 150) um eine parallel zur Werkzeugführungsebene (118) verlaufenden Achse (B) drehbar ist.

26. Werkzeugmaschine nach einem der voranstehenden Ansprüche, **dadurch gekennzeichnet, dass** der Werkzeugrevolver (130) relativ zur Werkzeugträgerbasis (102) in einer Vorschubrichtung (Y) linear bewegbar ist und um eine zur Vorschubrichtung (Y) parallele Achse (108) drehbar ist.

27. Werkzeugmaschine nach einem der voranstehenden Ansprüche, **dadurch gekennzeichnet, dass** die Werkzeugträgerbasis (102) auf einem Werkzeugschlitten (112) angeordnet ist.

28. Werkzeugmaschine nach Anspruch 27, **dadurch gekennzeichnet, dass** der Werkzeugschlitten (112) in einer Schlittenvorschubrichtung (X) bewegbar ist, die ungefähr parallel zu einer Längsrichtung (24, 26) der jeweiligen (20, 22) Säule verläuft.

29. Werkzeugmaschine nach Anspruch 27 oder 28, **dadurch gekennzeichnet, dass** der Werkzeugschlitten (112) in einer Schlittenvorschubrichtung (X) bewegbar ist, die ungefähr parallel zu einer Querrichtung zur jeweiligen Werkstückspindelachse (56, 76) verläuft.

30. Werkzeugmaschine nach einem der Ansprüche 27 bis 29, **dadurch gekennzeichnet, dass** der Werkzeugschlitten (112) in einer X-Richtung der Werkzeugmaschine bewegbar ist.

31. Werkzeugmaschine nach einem der voranstehenden Ansprüche, **dadurch gekennzeichnet, dass** die Vorschubrichtung (Y) ungefähr parallel zu einer Querrichtung zur jeweiligen Werkstückspindelachse (56, 76) verläuft.

32. Werkzeugmaschine nach einem der voranstehenden Ansprüche, **dadurch gekennzeichnet, dass** die Vorschubrichtung eine Y-Richtung der Werkzeugmaschine ist.

33. Werkzeugmaschine nach einem der Ansprüche 28 bis 32, **dadurch gekennzeichnet, dass** die Vorschubrichtung (Y) parallel zu einer Querrichtung zur Schlittenvorschubrichtung (X) verläuft.

34. Werkzeugmaschine nach einem der voranstehenden Ansprüche, **dadurch gekennzeichnet, dass** die Drehachse (B) in einer Richtung (Y) verläuft, die parallel zu einer Querrichtung zur jeweiligen Werkstückspindelachse (56, 76) ausgerichtet ist.

35. Werkzeugmaschine nach einem der voranstehenden Ansprüche, **dadurch gekennzeichnet, dass** die Drehachse eine B-Achse der Werkzeugmaschine ist.

## Claims

1. Machine tool comprising
a machine frame (10),
a first workpiece carrier unit (50, 70), which is disposed on the machine frame (10) and has a workpiece receiving means (55, 75);
at least one tool carrier unit (100), which is disposed on the machine frame (10) and on which at least one tool (160) for machining a workpiece (W) held in the workpiece receiving means (55, 75) is disposed,
and a working chamber (40), in which a workpiece (W) held in the workpiece receiving means (55, 75) can be machined with the tool (160), and the tool carrier unit (100) having a tool carrier base (102), a guide arm (106) that extends with a longitudinal axis (108), and a tool turret (130) that is held on the guide arm (106), the tool turret (130) having a turret housing (132) disposed on the guide arm (106), and a turret head (136) being rotatable relative to the turret housing about a turret axis (134) that runs transversely to the longitudinal axis (108),
**characterized in that** an intersection (139) between a tool plane (140) of the turret head (136) and the turret axis (134) lies within a geometrically cylindrical space (164) about the longitudinal axis (108), the space having a radius (R) that corresponds to an average radius of the guide arm (106).

2. Machine tool according to Claim 1, **characterized in that** the cylindrical space (164) has a radius (R) that corresponds to 0.5 of the average radius of the guide arm (106).

3. Machine tool according to Claim 2, **characterized in that** the cylindrical space (164) has a radius (R) that corresponds to 0.2 of the average radius of the guide arm (106).

4. Machine tool according to any of the preceding claims, **characterized in that** the intersection (139) lies approximately on the longitudinal axis (108).

5. Machine tool according to any of the preceding claims, **characterized in that** the tool receiving means (142) of the turret head (136) are formed so that tools (160) can be inserted into this tool holder (150) in a direction (148) of insertion.

6. Machine tool according to Claim 5, **characterized in that** the directions (148) of insertion run approximately parallel to the tool plane (140).

7. Machine tool according to Claim 5 or 6, **characterized in that** the tool receiving means (142) have central axes (146) that run approximately parallel in the tool plane (140).

8. Machine tool according to any of the preceding claims, **characterized in that** the turret head (136) is provided with a tool drive unit (172, 173) for power-driven tool holders (150).

9. Machine tool according to Claim 8, **characterized in that** the tool drive unit is a drive member (173) disposed in the turret head (136).

10. Machine tool according to Claim 8 or 9, **characterized in that** a drive motor (184) for the tool drive unit (172, 173) is provided in the tool turret (130).

11. Machine tool according to Claim 10, **characterized in that** the drive motor (184) is disposed in the turret housing (132).

12. Machine tool according to any of the preceding claims, **characterized in that** a drive motor (184) for rotary drive of the turret head (136) is disposed in the turret housing (132).

13. Machine tool according to any of Claims 10 to 12, **characterized in that** the same drive motor (184) is provided for rotary drive of the turret head (136) and for drive of the tool drive unit (172, 173).

14. Machine tool according to Claim 13, **characterized in that** a switchable coupling (194) is provided for changeover between drive of the tool drive unit (172, 173) and drive of the turret head (136).

15. Machine tool according to any of the preceding claims, **characterized in that** a drive unit (122) is provided on the tool carrier base (102) for movement of the guide arm (106) relative to the tool carrier base (102).

16. Machine tool according to Claim 15, **characterized in that** the drive unit (122) comprises a rotary drive (121), the rotor (126) of which is connected to the guide arm (106) and the stator (125) of which is guided in a rotationally fixed manner in a housing (124) of the drive unit (122).

17. Machine tool according to Claim 15 or 16, **characterized in that** the stator (125) of the rotary drive (121) can be displaced by a linear drive (123) relative to the housing (124) of the drive unit (122).

18. Machine tool according to any of Claims 15 to 17, **characterized in that** the housing (124) of the drive unit (122) is fixedly connected to the tool carrier base (102).

19. Machine tool according to Claim 18, **characterized in that** the tool carrier base (102) has a longitudinal rotary guide (110) for the guide arm (106).

20. Machine tool according to Claim 19, **characterized in that** the housing (124) of the drive unit (122) is connected to the longitudinal rotary guide (110).

21. Machine tool according to any of the preceding claims, **characterized in that** the workpiece carrier unit (50, 70) is a workpiece spindle unit (50, 70) that has a workpiece spindle (54, 74) which is rotatable about a workpiece spindle axis (56, 76).

22. Machine tool according to Claim 21, **characterized in that** the tool turret (130) of the at least one tool carrier unit (100, 150) is movable parallel to a tool guide plane (118), which runs transversely to the workpiece spindle axis (56, 76) of the workpiece spindle unit (50, 70) associated with this workpiece spindle axis.

23. Machine tool according to Claim 22, **characterized in that** the tool turret (130) of the at least one tool carrier unit (100, 150) is movable in the tool guide plane (118) in a first direction (X) that runs parallel to a spindle guide plane (80).

24. Machine tool according to Claim 22 or 23, **characterized in that** the tool turret (130) of the at least one tool carrier unit (100, 150) is movable in the tool guide plane (118) in a second direction (Y) that runs perpendicular to the spindle guide plane (80).

25. Machine tool according to any of Claims 22 to 24, **characterized in that** the tool turret (130) of the at least one tool carrier unit (100, 150) is rotatable about an axis (B) that runs parallel to the tool guide plane (118).

26. Machine tool according to any of the preceding claims, **characterized in that** the tool turret (130) is linearly movable relative to the tool carrier base (102) in a direction (Y) of advance and is rotatable about an axis (108) that is parallel to the direction (Y) of advance.

27. Machine tool according to any of the preceding claims, **characterized in that** the tool carrier base (102) is disposed on a tool slide (112).

28. Machine tool according to Claim 27, **characterized in that** the tool slide (112) is movable in a direction (X) of slide advance, which runs approximately parallel to a longitudinal direction (24, 26) of the respective column (20, 22).

29. Machine tool according to Claim 27 or 28, **characterized in that** the tool slide (112) is movable in a direction (X) of slide advance, which runs approximately parallel to a transverse direction of the respective workpiece spindle axis (56, 76).

30. Machine tool according to any of Claims 27 to 29, **characterized in that** the tool slide (112) is movable in an X direction of the machine tool.

31. Machine tool according to any of the preceding claims, **characterized in that** the direction (Y) of advance runs approximately parallel to a transverse direction in relation to the respective workpiece spindle axis (56, 76).

32. Machine tool according to any of the preceding claims, **characterized in that** the direction of advance is a Y direction of the machine tool.

33. Machine tool according to any of Claims 28 to 32, **characterized in that** the direction (Y) of advance runs parallel to a transverse direction in relation to the direction (X) of slide advance.

34. Machine tool according to any of the preceding claims, **characterized in that** the axis (B) of rotation runs in a direction (Y) which is aligned parallel to a transverse direction in relation to the respective workpiece spindle axis (56, 76).

35. Machine tool according to any of the preceding claims, **characterized in that** the axis of rotation is a B axis of the machine tool.

## Revendications

1. Machine-outil, comportant
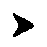 un bâti (10) ;
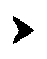 une première unité porte-pièce (50, 70), montée sur le bâti (10), munie d'un porte-pièce (55, 75) ;
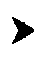 au moins une unité porte-outil (100), montée sur le bâti (10), sur laquelle est monté au moins un outil (160) pour l'usinage d'une pièce (W) fixée dans le porte-pièce (55) ;
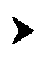 et un espace de travail (40) dans lequel une pièce (W) fixée dans le porte-pièce (55, 75) peut être usinée avec l'outil (160), et
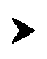 l'unité porte-outil (100) comporte une base (102), un bras de guidage (106) s'étendant avec un axe longitudinal (108), et une tourelle revolver (130) maintenue sur le bras de guidage (106), la tourelle revolver (130) comportant un carter (132), qui est disposé sur le bras de guidage (106), et par rapport auquel une tourelle (136) est apte à tourner autour d'un axe (134) orienté transversalement à l'axe longitudinal (108),
**caractérisée en ce qu'**un point d'intersection (139) entre un plan d'outil (140) de la tourelle (136) et l'axe (134) de la tourelle revolver se situe à l'intérieur d'un espace cylindrique (164) géométrique, qui s'étend autour de l'axe longitudinal (108) et qui possède un rayon (R) correspondant à un rayon moyen du bras de guidage (106).

2. Machine-outil selon la revendication 1, **caractérisée en ce que** l'espace cylindrique (164) possède un rayon (R) correspondant 0,5 fois au rayon moyen du bras de guidage (106).

3. Machine-outil selon la revendication 2, **caractérisée en ce que** l'espace cylindrique (164) possède un rayon (R) correspondant 0,2 fois au rayon moyen du bras de guidage (106).

4. Machine-outil selon l'une quelconque des revendications précédentes, **caractérisée en ce que** le point d'intersection (139) se situe approximativement sur l'axe longitudinal (108).

5. Machine-outil selon l'une quelconque des revendications précédentes, **caractérisée en ce que** les logements pour outil (142) dans la tourelle (136) sont réalisés de telle sorte que des porte-outils (150) avec des outils (160) peuvent y être insérés dans une direction d'introduction (148).

6. Machine-outil selon la revendication 5, **caractérisée en ce que** les directions d'introduction (148) sont à peu près parallèles au plan d'outil (140).

7. Machine-outil selon la revendication 5 ou 6, **caractérisée en ce que** les logements pour outil (142) comportent des axes médians (146), qui sont situés à peu près parallèlement dans le plan d'outil (140).

8. Machine-outil selon l'une quelconque des revendications précédentes, **caractérisée en ce que** la tourelle (136) est munie d'une unité d'entraînement d'outil (172, 173) pour des porte-outils (150) actionnés.

9. Machine-outil selon la revendication 8, **caractérisée en ce que** l'unité d'entraînement d'outil est un élément d'entraînement (173) disposé dans la tourelle (136).

10. Machine-outil selon la revendication 8 ou 9, **caractérisée en ce qu'**il est prévu un moteur d'entraînement (184) pour l'unité d'entraînement d'outil (172, 173) dans la tourelle revolver (130).

11. Machine-outil selon la revendication 10, **caractérisée en ce que** le moteur d'entraînement (184) est disposé dans le carter (132) de la tourelle revolver.

12. Machine-outil selon l'une quelconque des revendications précédentes, **caractérisée en ce que** dans le carter (132) de la tourelle revolver est disposé un moteur d'entraînement (184) pour un actionnement rotatif de la tourelle (136).

13. Machine-outil selon l'une quelconque des revendications 10 à 12, **caractérisée en ce que** le même moteur d'entraînement (184) est prévu pour l'actionnement rotatif de la tourelle (136) et pour l'actionnement de l'unité d'entraînement d'outil (172, 173).

14. Machine-outil selon la revendication 13, **caractérisée en ce qu'**il est prévu un couplage (194) commutable pour commuter entre l'actionnement de l'unité d'entraînement d'outil (172, 173) et l'actionnement de la tourelle (136).

15. Machine-outil selon l'une quelconque des revendications précédentes, **caractérisée en ce que**, sur la base (102) du porte-outil, il est prévu une unité d'entraînement (122) pour le déplacement du bras de guidage (106) par rapport à la base (102) du porte-outil.

16. Machine-outil selon la revendication 15, **caractérisée en ce que** l'unité d'entraînement (122) comporte un système d'entraînement en rotation (121), dont le rotor (126) est relié au bras de guidage (106) et dont le stator (125) est logé immobile en rotation dans un carter (124) de l'unité d'entraînement (122).

17. Machine-outil selon la revendication 15 ou 16, **caractérisée en ce que** le stator (125) du système d'entraînement en rotation (121) est apte à coulisser par rapport au carter (124) de l'unité d'entraînement (122) au moyen d'un système d'entraînement linéaire (123).

18. Machine-outil selon l'une quelconque des revendications 15 à 17, **caractérisée en ce que** le carter (124) de l'unité d'entraînement (122) est assemblé de manière fixe à la base (102) du porte-outil.

19. Machine-outil selon la revendication 18, **caractérisée en ce que** la base (102) du porte-outil comporte un guidage rotatif et longitudinal (110) pour le bras de guidage (106).

20. Machine-outil selon la revendication 19, **caractérisée en ce que** le carter (124) de l'unité d'entraînement (122) est relié au guidage rotatif et longitudinal (110).

21. Machine-outil selon l'une quelconque des revendications précédentes, **caractérisée en ce que** l'unité porte-pièce (50, 70) est une unité à broche porte-pièce (50, 70) comportant une broche porte-pièce (54, 74) apte à tourner autour d'un axe (56, 76) de la broche.

22. Machine-outil selon la revendication 21, **caractérisée en ce que** la tourelle revolver (130) de ladite au moins une unité porte-outil (100, 150) est apte à se déplacer parallèlement à un plan de guidage de l'outil (118), qui s'étend transversalement à l'axe (56, 76) de la broche de l'unité à broche porte-pièce (50, 70) associée à cet axe.

23. Machine-outil selon la revendication 22, **caractérisée en ce que** la tourelle revolver (130) de ladite au moins une unité porte-outil (100, 150) est apte à se déplacer dans le plan de guidage de l'outil (118) dans une première direction (X) parallèle à un plan de guidage de la broche (80).

24. Machine-outil selon la revendication 22 ou 23, **caractérisée en ce que** la tourelle revolver (130) de ladite au moins une unité porte-outil (100, 150) est apte à se déplacer dans le plan de guidage de l'outil (118) dans une deuxième direction (Y) perpendiculaire au plan de guidage de la broche (80).

25. Machine-outil selon l'une quelconque des revendications 22 à 24, **caractérisée en ce que** la tourelle revolver (130) de ladite au moins une unité porte-outil (100, 150) est apte à tourner autour d'un axe (B) parallèle au plan de guidage de l'outil (118).

26. Machine-outil selon l'une quelconque des revendications précédentes, **caractérisée en ce que** la tourelle revolver (130) est apte à se déplacer linéairement par rapport à la base (102) du porte-outil dans une direction d'avance (Y) et est apte à tourner autour d'un axe (108) parallèle à la direction d'avance (Y).

27. Machine-outil selon l'une quelconque des revendications précédentes, **caractérisée en ce que** la base (102) du porte-outil est disposée sur un chariot porte-outil (112).

28. Machine-outil selon la revendication 27, **caractérisée en ce que** le chariot porte-outil (112) est apte à se déplacer dans une direction d'avance (X) , qui est à peu près parallèle à une direction longitudinale (24, 26) de la colonne (20, 22) respective.

29. Machine-outil selon la revendication 27 ou 28, **caractérisée en ce que** le chariot porte-outil (112) est apte à se déplacer dans une direction d'avance (X) qui est à peu près parallèle à une direction transversale par rapport à l'axe (56, 76) correspondant de la broche porte-pièce.

30. Machine-outil selon l'une quelconque des revendications 27 à 29, **caractérisée en ce que** le chariot porte-outil (112) est apte à se déplacer dans une direction X de la machine-outil.

31. Machine-outil selon l'une quelconque des revendications précédentes, **caractérisée en ce que** la direction d'avance (Y) est à peu près parallèle à une direction transversale par rapport à l'axe (56, 76) correspondant de la broche porte-pièce.

32. Machine-outil selon l'une quelconque des revendications précédentes, **caractérisée en ce que** la direction d'avance est une direction Y de la machine-outil.

33. Machine-outil selon l'une quelconque des revendications 28 à 32, **caractérisée en ce que** la direction d'avance (Y) est parallèle à une direction transversale par rapport à la direction d'avance (X) du chariot porte-outil.

34. Machine-outil selon l'une quelconque des revendications précédentes, **caractérisée en ce que** l'axe de rotation (B) s'étend dans une direction (Y) qui est orientée parallèlement à une direction transversale par rapport à l'axe (56, 76) correspondant de la broche porte-pièce.

35. Machine-outil selon l'une quelconque des revendications précédentes, **caractérisée en ce que** l'axe de rotation est un axe B de la machine-outil.
